# EUROPEAN PATENT APPLICATION

(11) **EP 1 124 362 A2**
(43) Date of publication of application: **16.08.2001**
(21) Application number: 01300501.2
(22) Date of filing: 19.01.2001
(51) Int. Cl.: H04L 29/06

(54) **Apparatus for processing TCP/IP by hardware, and operating method therefor**

(30) Priority: 19.01.2000 US 176971 P; 27.07.2000 US 626687
(71) Applicant: Wiznot Corp., Kangnam-ku, Seoul (KR); Lee, Jung Tae, Haewundae-ku, Busan-si (KR)
(72) Inventor: Lee, Jung Tae, Haewundae-ku Busan-si (KR); Kim, Ku Hwan, Donglae-ku, Busan-si (KR)
(74) Representative: Powell, Timothy John

(57) **Abstract**

An apparatus for processing the TCP/IP (Transmission Control Protocol / Internet Protocol) by hardware is disclosed. In this apparatus, an information plane for transmitting, receiving and processing the user data is separated from a control plane for controlling the transmission and reception of the data by using a hardware. Thus the data transmission is carried out regardless of the processing of the control information. Further, a buffer is provided to store the data to be transmitted and the data received, thereby reducing the number of the memory access times. Further, during the transmission of a segment, the calculation of the checksum for the next predictable header and data is carried out simultaneously, thereby reducing the overhead for the checksum calculation. Further, the addresses of the data to be transmitted are inserted into the sequence number field when transmitting the data, while during the reassembling, the values of the sequence number fields are used as the pointers for storing the data into the memory, thereby improving the overhead related to the memory addressing.

## Description

### FIELD OF THE INVENTION

The present invention relates to an apparatus for processing the TCP/IP (Transmission Control Protocol / Internet Protocol) by hardware, and an operating method therefor, in which the user data can be transmitted and received through the internet in the form of TCP segments with an improved efficiency.

### DESCRIPTION OF THE PRIOR ART

If the Internet is to be used, the same communication protocols have to be utilized in the terminals of the both of the concerned parties, and the TCP/IP (Transmission Control Protocol / Internet Protocol) are most generally employed. At present, the TCP/IP is implemented by a software, and are included in the operating system.

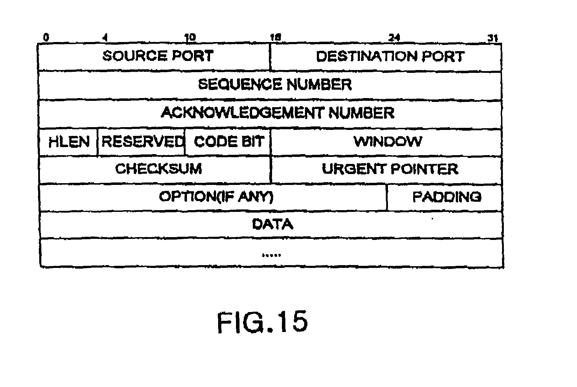

In the TCP, a standardized segment format is used as shown in FIG. 15. Referring to FIG. 15, the source port and the destination port are fields which represent the transmitting side port and the receiving side port for exchanging the data. In the TCP, call connections can be carried out for the respective application programs, and therefore, the application programs in which the call connections have been carried out are distinguished by utilizing the port number.

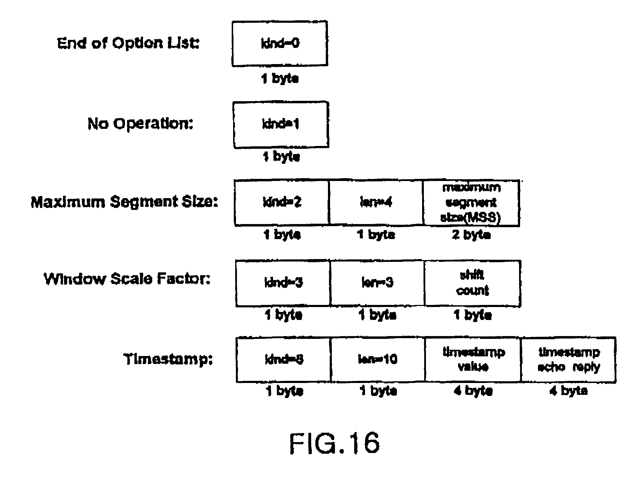

Meanwhile, the sequence number field shows the byte position of the transmitted data, which has been sent from the transmitting end. The acknowledgement number field shows the byte position of the data, which is to be received next. The HLEN field shows the length of the header in units of 32 bits. The WINDOW field shows the reserve space of the receiving side buffer. The CODE BIT field consists of 6 bits and is used as shown in table 1. The URGENT POINTER field indicates the ending position of a data in the case where an urgent data is included in the data field. The option field is for adding various options, and the kinds of the options are very diversified as illustrated in FIG. 16.

**Table 1**

| Code bit | In case set to 1 |
|---|---|
| URG | URGENT POINTER field is effective. |
| ACK | Acknowledgement field is effective. |
| PSH | The data which has been sent is directly transferred to the user without buffering. |
| SYN | Requests or allows call connections. |
| FIN | Requests or allows connection release. |
| RESET | Initializes the connection setting. |

As shown in FIG. 16, the option field consists of Kind, Length and Option data. In FIG. 16, "End of Option List" shows the end of option, and "No Operation" is used for padding the respective options in 4-byte units. Further, "Maximum Segment Size option" is used for determining the maximum segment size (MSS) carrying out the transmissions and receptions while connecting call. Further, "Window Scale Factor" is used for an option for expanding the window field of the presently used TCP, and "Timestamp Option" is used for calculating the Round Trip Time(RTT) by exchanging the time information between the transmitting and receiving sides.

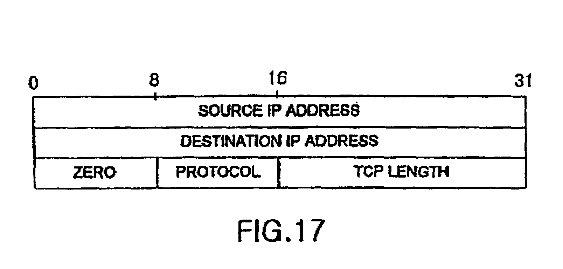

Referring to FIG. 15, "The Checksum Field" is for checking the transmission errors for the header and the data. Under this condition, the checksum calculation is carried out by making a pseudo header of FIG. 17 involved. That is, the TCP checksum calculates one final checksum by unifying the data checksum, the TCP header checksum and the pseudo header checksum. In the checksum calculation by the TCP, all the data are summed up in 16-bit units, and the complementary number of 1 is taken. Such calculations are carried out for the header and the data in the TCP, while in the IP, the calculation is carried out only for the header.

Meanwhile, as shown in FIG. 17, the pseudo header includes: the IP address of the transmitting end, the IP address of the receiving end, the protocol field for showing the values of the upper level protocols, and the TCP length field. For example, in the case where a TCP segment is transmitted at the IP layer, the protocol field is set to 6, while the TCP length is the sum addition of the TCP header and data.

The TCP which is presently used in the internet consists of a software. However, this conventional software TCP cannot transfer the efficiency from the lower level to the user application, first due to the overhead of the structural problems, second due to the overhead of the memory access problems, and third due to the overhead of the checksum calculating problems.

To describe the above problems in more detail, first in the conventional TCP software, the control information and the data information are handled without being distinguished from each other, and therefore, the TCP processing time is not constant due to the processing of the control information even during the data transmission, as well as the performance being lowered. Particularly, in the multi-media application in which a predetermined processing time has to be ensured, the above cited demerits can be fatal.

Second, as shown in Table 2 below, when the TCP is embodied, the time of transferring the memory data to the network card or the time of transferring the received data (received into the network card) to the user region of the memory is very long. Accordingly, as the number of times of the memory access becomes large, so much the overhead is increased.

**Table 2.**

| Time of processing the TCP protocol | |
|---|---|
| Items processed | Processing time [µs] |
| User - system copy | 200 |
| TCP checksum | 185 |
| Network - memory copy | 386 |
| Ethernet drivers | 100 |
| TCP+IP+ARP protocols | 100 |
| Operation system overhead | 240 |

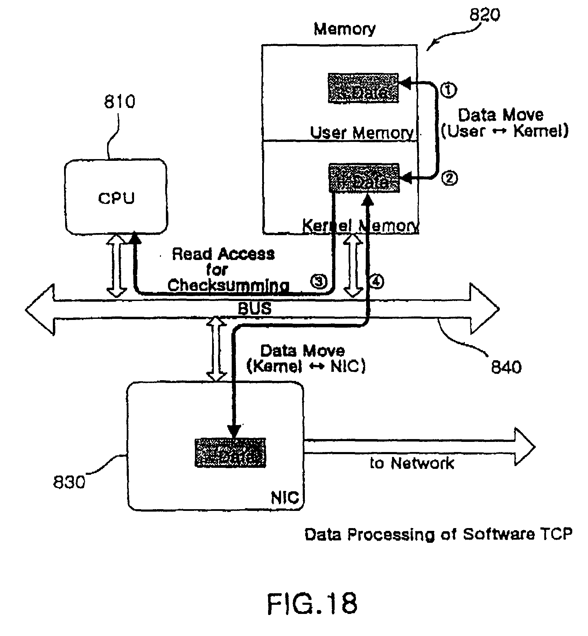

In the conventional embodying means as shown in FIG. 18, when the data is transmitted, the data which has been stored in the user region of the memory 820 is moved to a kernel buffer ( ① , ② ), then a CPU 810 reads the data of the kernel region of the memory 820 to calculate the checksum ( ③ ), and then, the data of the kernel buffer is transferred to a network card 830 based on a DMA method ( ④ ). In the same manner, when the data is received, first the received data is stored in the network card 830, then the data is transferred to the kernel buffer ( ④ ), then the CPU 810 reads the data to check any errors ( ③ ), and then, if there is no error, the data is transferred from the kernel buffer to the user buffer ( ② , ① ). That is, for any one of data, four accesses are carried out, and therefore, the performance of the overhead becomes problematic.

Third, in the TCP as shown in FIG. 15, the checksum field is positioned at the header, and therefore, in the conventional checksum design method, the relevant segment can be transmitted only after the completion of the calculation of the checksum. For example, in the case where a data of 1460 bytes is transmitted, first the 20 bytes of the TCP header data and the 12 bytes of the pseudo header data are read to calculate the checksum, and then, the 1460 bytes of the data are read to calculate the checksum. Only then, the TCP segment can be transmitted. Accordingly, during the time when the checksums are calculated, the data cannot be transmitted, and therefore, so much a time delay occurs in carrying out the data transmission. In the case of the IP protocol, the checksum calculation gives no much problem, because, in this case, the header size is generally 20 bytes, and 10 command codes will be sufficient if the calculation is carried out at 16 bits. However, in the TCP protocol, the checksums not only for the TCP header but also for the total data have to be calculated, and therefore, the overhead is excessively increased.

Fourth, when the TCP transmits the data of application layers, the data is cut into segments of a certain size at the transmitting end, and the data is reassembled at the receiving end. For this, at the receiving end, a link list type data structure is formed to store the data in the memory, so that the data positions would not be wrongly located. In this conventional method, the reassembling of the data is carried out after the completion of the reception of the data, and therefore, the overhead becomes problematic.

### SUMMARY OF THE INVENTION

The present invention is intended to overcome the above described disadvantages of the conventional technique.

Therefore, it is an object of the present invention to provide an apparatus for processing the TCP/IP by hardware, and an operating method therefor, in which the user data can be transmitted and received through the internet in the form of TCP segments with an improved efficiency.

In achieving the above object, the apparatus and method according to the present invention are characterized as follows. That is, in the TCP/IP, an information plane for transmitting, receiving and processing the user data is separated from a control plane for controlling the transmission and reception of the data by using a hardware. Thus the data transmission is carried out regardless of the processing of the control information. Further, a buffer is provided to store the data to be transmitted and the data received, thereby reducing the number of the memory access times. Further, during the transmission of a segment, the calculation of the checksum for the next predictable header and data is carried out simultaneously, thereby reducing the overhead for the checksum calculation. Further, the addresses of the data to be transmitted are inserted into the sequence number field when transmitting the data, while during the reassembling, the values of the sequence number fields are used as the pointers for storing the data into the memory, thereby improving the overhead related to the memory addressing.

### BRIEF DESCRIPTION OF THE DRAWINGS

The above object and other advantages of the present invention will become more apparent by describing in detail the preferred embodiment of the present invention with reference to the attached drawings in which:
FIG. 1 is a block diagram showing the overall constitution of the apparatus for processing the TCP/IP by hardware according to the present invention;
FIG. 2 is a flow chart showing the operation of the apparatus for processing the TCP/IP by hardware according to the present invention;
FIG. 3 is a block diagram showing the TX information part of the apparatus for processing the TCP/IP by hardware according to the present invention;
FIG. 4 is a block diagram showing the TCP RX information part of the apparatus for processing the TCP/IP by hardware according to the present invention;
FIG. 5 is a block diagram showing the control part of the apparatus for processing the TCP/IP by hardware according to the present invention;
FIG. 6 is a block diagram showing the buffer management in the apparatus for processing the TCP/IP by hardware according to the present invention;
FIG. 7 is a block diagram showing the memory access method in the apparatus for processing the TCP/IP by hardware according to the present invention;
FIG. 8 illustrates a part of the constitution of the apparatus for processing the TCP/IP by hardware according to the present invention, with a pipeline checksum calculation method being applied;
FIG. 9 is a flow chart showing the sequence of the pipeline checksum calculation method according to an embodiment of the present invention;
FIG. 10 is a timing diagram showing a size of transmission data varied as a time in a multi-channel environment.
FIG. 11 is timing diagram describing the checksum calculation method according to other embodiment of the present invention.
FIG. 12 is flow chart showing the sequence of the pipeline checksum calculation method according to other embodiment of the present invention.
FIG. 13 illustrates a transmission method using a sequence number in the apparatus for processing the TCP/IP by hardware according to the present invention;
FIG. 14 illustrates the reassembling of the data by using the sequence numbers in the apparatus according to the present invention;
FIG. 15 illustrates the structure of the segment based on the TCP (transmission Control Protocol);
FIG. 16 illustrates the kinds of the option field in the TCP segment;
FIG. 17 illustrates the structure of the pseudo header;
FIG. 18 is a block diagram showing the conventional memory access method; and
FIG. 19 comparatively illustrates the conventional checksum calculation method and the checksum calculation method according to the present invention.

### DETAILED DESCRIPTION OF THE PREFERRED EMBODIMENTS

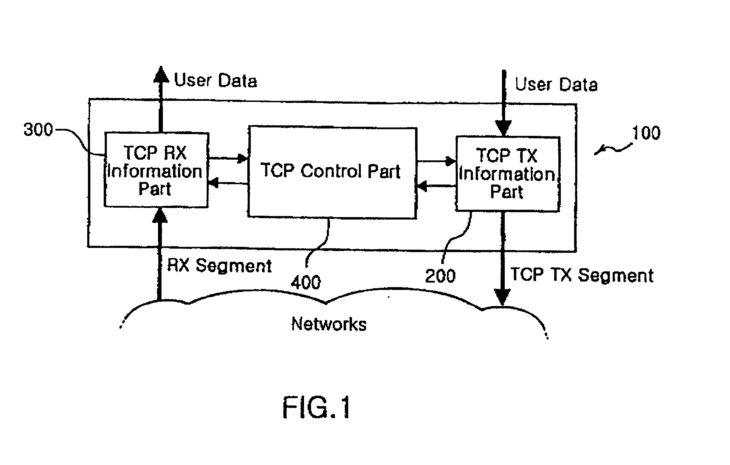

The apparatus for processing the TCP/IP (Transmission Control Protocol / Internet Protocol) by hardware, and an operating method therefor, will be described below. In this context, the part of processing the TCP is same as that of processing the IP, and therefore, only the part of processing the TCP will be described.
First, the present invention solves the overhead structural problems caused by the simultaneous processing of the control information and the data information. For this purpose, a control part for carrying out the control processing is separated from an information part for carrying out the data transmission and reception. One example of this feature is illustrated in FIG. 1.

FIG. 1 is a block diagram showing the overall constitution of the apparatus for processing the TCP/IP by hardware according to the present invention. Particularly, FIG. 1 illustrates a part of processing the TCP. As shown in this drawing, the apparatus 100 according to the present invention includes: a TX information part 200 for processing a user data to transmit it to a destination; an RX information part 300 for receiving a TCP segment from a transmitting side to process it, and to transmit a user data to an application layer; and a control part 400 for processing the control information related to the transmission and reception data.

As described above, the data processing part is separated from the control information processing part in the present invention. The TX information part 200 and the RX information part 300 handle the transfer of the information, while the control part 400 manages the protocol status so as to control the operations of the information parts 200 and 300. Therefore, as long as a sudden event such as an error or an overflow does not occur, the information parts 200 and 300 can transmit the user information without being concerned with the control information.

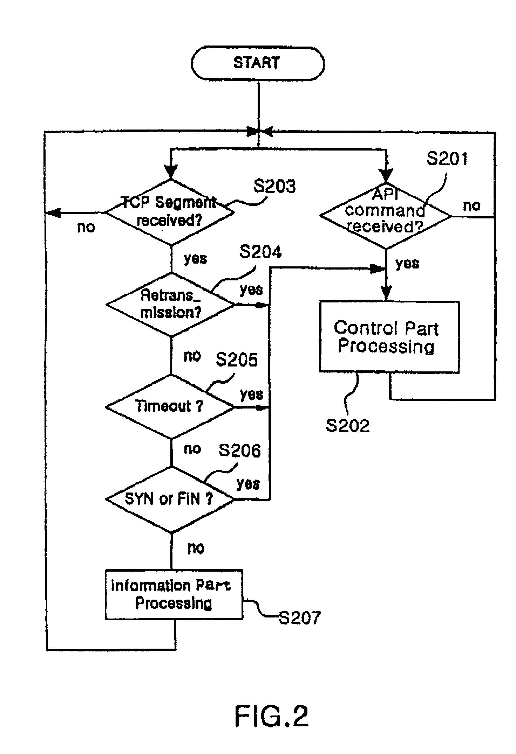

FIG. 2 is a flow chart showing the operation of the apparatus for processing the TCP/IP by hardware according to the present invention. If a command (API command) is received from an application layer (s201), then the control part 400 receives it to take a proper action (s202). If a user data or a TCP segment is received (s203), then a checking is made as to whether there is present a control information such as an error, a timeout, a SYN or a FIN (s204 - s206). If there is a control information, the control part 400 processes it, while the data is processed by the information parts 200 and 300 (s207).

Now the respective parts of the apparatus of FIG. 1 will be described as to their constitutions and actions.

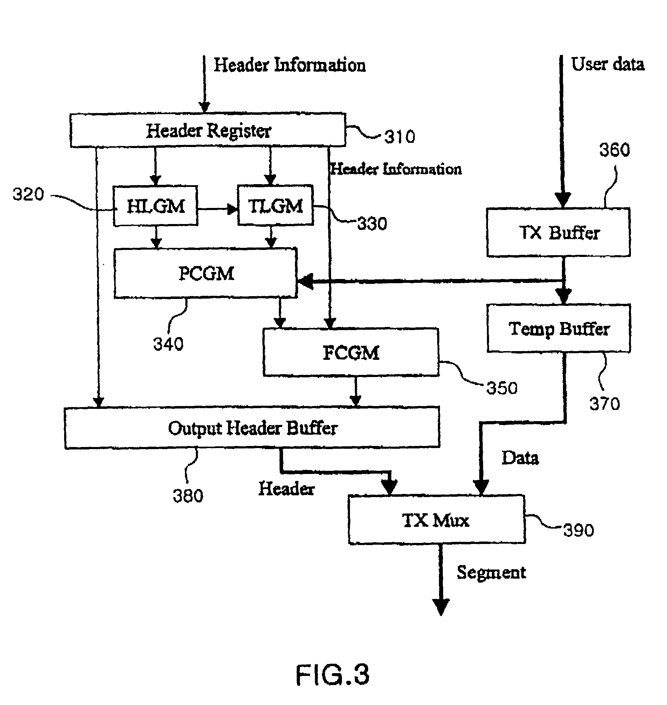

FIG. 3 illustrates the TX information part 200 which forms the header of the TCP segment, and transfers it to the network layer together with the user data.

The TX information part 200 includes: a header register 210 for storing a received TCP header information; an HLGM (header length generating module) 220 for receiving a header information from the header register 210 to calculate a length of the header; a TLGM (total length generating module) 230 for receiving a data length information from the header register 210, and for receiving a header length value from the HLGM 220, to calculate a total segment length as the sum of the header length and the data length; a PCGM (partial checksum generating module) 240 for receiving a part of the TCP header and a data, to calculate a partial checksum for a predictable values among the TCP headers and the data; an FCGM (final checksum generating module) 250 for adding a window value and an ACK number (decided immediately before a transmission of the TCP segment) to the partial checksum of the PCGM (240), to generate a final checksum; a TX buffer 260 for receiving a user data (to be transmitted) through a bus of a host system, to store it; a temp buffer 270 for temporarily storing the data (which has been read to calculate the checksum); an output header buffer 280 for temporarily storing the header information together the final checksum of the FCGM 250; and a TX Mux (TX multiplexer) 290 for summing up the user data of the temp buffer 270 and the checksum of the output header buffer 280, to generate a TCP segment.

The header of the TCP segment basically has 20 bytes, but its length can be varied depending on the kind of the option field. Therefore, each time when one segment is transmitted, the length of the header has to be known. The input of the HLGM 220 is the signals which indicate the presence or absence of the option which is provided by the control part 400. The output of the HLGM 220 is the signals which indicate the header length.

Meanwhile, if the checksum calculation which is one of the functions of the TX information part 200 is to be carried out, not only the header and data as described above but also the pseudo header of FIG. 17 are required. The pseudo header includes the IP addresses of the transmitting and receiving sides, the kinds of the protocols, and the lengths of the TCP. Of them, the length of the TCP is calculated by the TLGM 230. The input of the TLGM 230 includes the header length value as the output of the HLGM 220 and the length value of the data to be transmitted. The output of the TLGM 230 includes the TCP length of the TCP segment, and this output is inputted into the FCGM 250.

Referring to FIG. 3, the temp buffer 270 which temporarily stores the calculated checksum data is an FIFO (first-in first-out) type buffer.

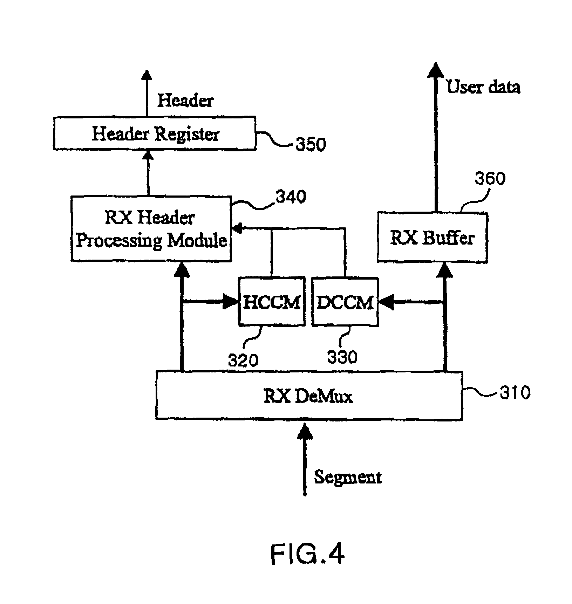

FIG. 4 is a block diagram showing the RX information part 300 of the apparatus for processing the TCP/IP by hardware according to the present invention. As shown in this drawing, the RX information part 300 includes: an RX Demux (RX demultiplexer) 310 for separating the header and the data from each other in the received TCP to output them; an HCCM (header checksum control module) (320) for checking the checksum of the header (separately outputted from the RX Demux 310) to judge on transmission errors; a DCCM (data checksum control module) 330 for checking the checksum of the data (separately outputted from the RX Demux 310) to judge on transmission errors; an RX header processing module 340 for carrying out a relevant processing in accordance with the output header information of the RX Demux 320, and for discarding the received data if an error is found in the header or the data by the HCCM 320 or the DCCM 330, to carry out an operation based on the received header; and a header register 350 for storing the received header.

In the above, a part of the header which is stored in the header register 350 is transferred to the control part 400.

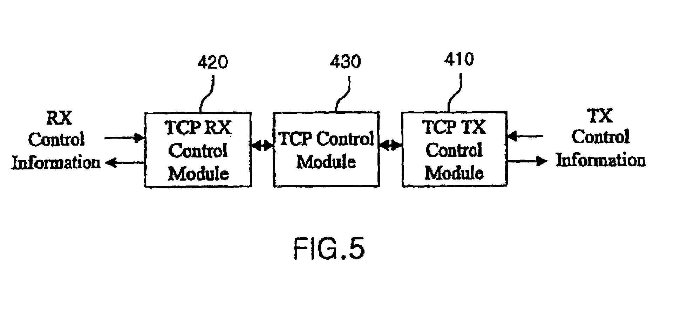

FIG. 5 illustrates the control part 400 which generates proper control signals in accordance with the status of the protocol so as to control the information parts 200 and 300. As shown in this drawing, the control part 400 includes: a TX control module 410 for controlling the TX control part 200 in accordance with the status of the protocol; an RX control module 420 for generating proper control signals in accordance with the status of the protocol to receive the TCP segment (directed toward itself) so as to control the RX information part 300; and a TCP control module 430 for controlling the entire apparatus 100 to process the TCP by hardware.

For example, if a congestion occurs in the network, the TX control module 410 generates a congestion window value to adjust the amount of the transmitting data. Further, the module 410 carries out the functions of a time-out, an RTT generation, and a congestion manager. If an error occurs in the transmitted data, the module 410 orders a transmission of the relevant data to the TX information part 200.

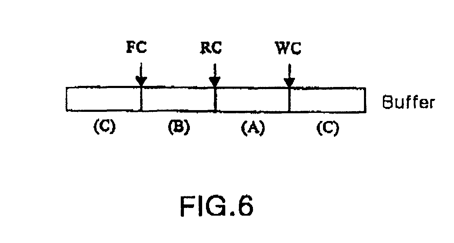

The RX control module 420 checks as to whether the destination port of the received segment is correct, and controls the pointer of the buffer to manage an RX buffer 360 of the RX information part 300. That is, FIG. 6 illustrates the RX buffer 360 and a counter which is used for managing the mentioned buffer. Here, a WC (write counter) is a pointer which indicates the position for inserting the received user data. An RC (read counter) is a pointer which indicates the starting position for the data to be read and to be transmitted. An FC (free counter) is a pointer which indicates the position for receiving an acknowledgement after the transmission of the data. The WC, the RC and the FC all perform a circular queue type operation in which they return to the original positions upon encountering the boundary. In FIG. 6, the region (A) indicates the stored user data which has not been transmitted. The region (B) indicates the data which has been transmitted but for which an acknowledgement has not been received. The region (C) indicates a free region in which the acknowledgement has been received, and therefore, the region is vacant.

The TCP control module 430 controls various command registers within the TCP generating apparatus 100 to process the commands of the user API. Further, the TCP control module 430 controls control registers and flag registers to order the operations of the TX/RX control modules 410 and 420. Further, the TCP control module 430 controls status registers to notify the status of the TCP generating apparatus 100 to the user API. Further, it manages an FSM (finite state machine), and sets or releases connections.

Second, in the present invention, the overhead due to the memory access is improved. For this purpose, exclusive buffers for storing the data are provided within the apparatus 100 so as to reduce the number of times of memory access. That is, there are provided a TX buffer 260 within the TX information part 200, and an RX buffer 360 within the RX information part 300. Further, in the apparatus 100, the checksum calculation is not carried out in the CPU of the host system, but is carried out in the apparatus 100, and therefore, the memory access times are decreased, thereby improving the overhead to a significant degree.

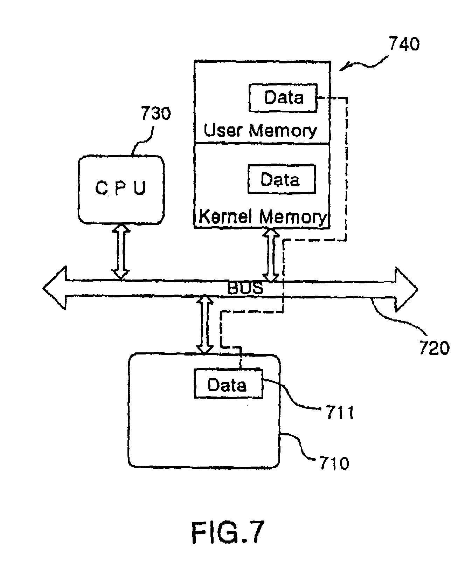

As shown in FIG. 7, it will be assumed that: reference code 740 indicates the memory of the host system, 730 indicates the CPU of the host system, 720 indicates the bus, and 710 indicates the apparatus for processing the TCP by hardware. Then the data which is stored in the user region of the memory 740 is directly transmitted to the buffer 711 of the TCP generating apparatus 710. Further, the data which is stored in the buffer 711 is directly transmitted to the user region of the memory 740.

Third, in order to improve the overhead during the checksum calculation in the present invention, when transmitting a segment based on a pipe line technique, the checksum of a predictable field of the next transmitting segment is calculated simultaneously. The checksum calculation method in the apparatus 100 of the present invention can be categorized into checksum calculation method for static data length and checksum calculation method for variable data length.

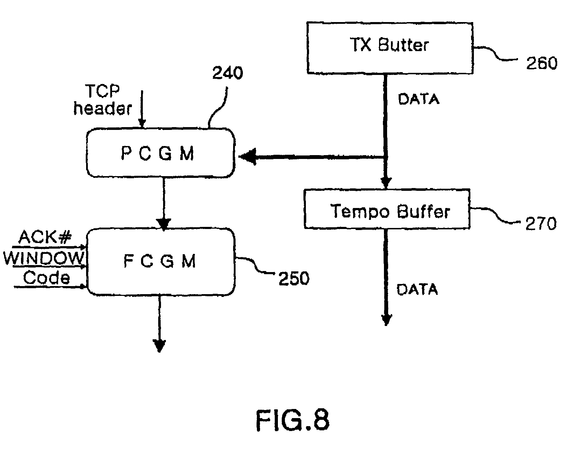

FIG. 8 is a block diagram specifically showing the checksum calculation for static length data in the apparatus 100 of the present invention. That is, the data to be transmitted is stored in the TX buffer 260, and the PCGM 240 receives the data of the TX buffer 260 and a predictable TCP header. Then the checksum of the inputted data and the TCP header is calculated, thereby generating a partial checksum. Here, the predictable TCP header corresponds to all the fields of FIG. 15 excluding the acknowledgement number, the WINDOW, and the code bits. That is, the mentioned "all the fields" are those which are not changed during the time when the TCP connection is maintained.

The partial checksum which has been generated in the above described manner is inputted into the FCGM 250, and the FCGM 250 receives the ACK number, the WINDOW value and the code bits which are decided immediately before the transmission, thereby generating a final checksum. During the time when the checksum is calculated, the relevant user data is stored in the FIFO type temp buffer 270. The procedure of reading the data of the temp buffer 270 and the procedure of calculating the checksum for the data to be transmitted next, are simultaneously carried out.

As described above, the fact that the checksum for the predictable header and the data can be calculated owes to the fact that in order to calculate the checksum by the Transmission Control Protocol (TCP), the input values are summed in 16-bit units, and then, a complementary number of 1 is taken so as to add them.

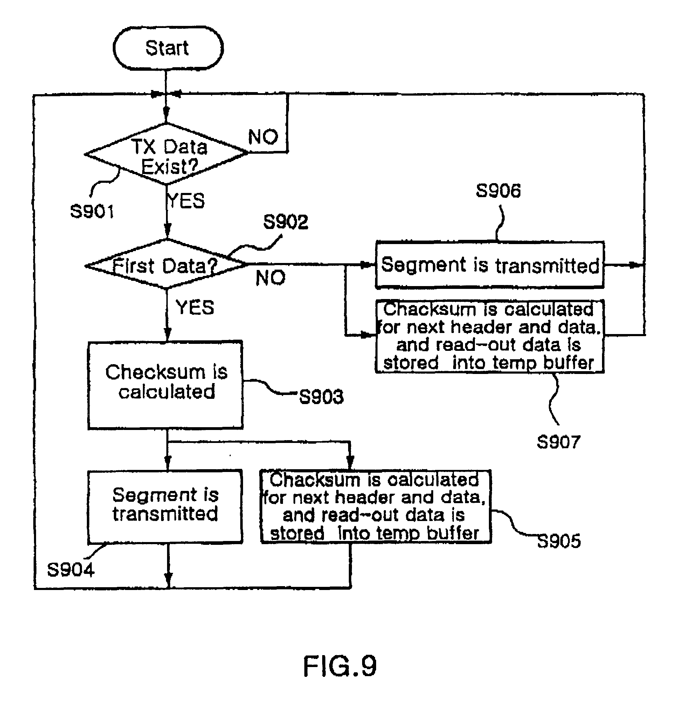

The operation algorithm by which the checksum is calculated by the TX information part 200 based on the pipe line method corresponds to the flow chart of FIG. 9.

As shown in this drawing, first a checking is made as to whether a data to be transmitted is present in the memory (s901). If there is one, then a checking is made as to whether it is a first transmitting data (s902). Under this condition, if it is a first transmitting data, there is no calculated checksum value. Therefore, a checksum is calculated (s903), and then, a TCP segment is generated to transmit the data (s904). Under this condition, when the data is transmitted, a checksum for the next transmitting data and header is simultaneously calculated (s905). Under this condition, the data which is read for calculating the checksum is stored in the temp buffer 270. On the other hand, if the data is not a first transmitting data, there should be a checksum which has been already calculated at the preceding step. Therefore, a segment is formed by using the already calculated checksum and the header and the data (which are stored in the temp buffer 270) to transmit the data (s906). At the same time, a checksum for the next transmitting data and header is calculated (s907).

As described above, in the present invention, in order to reduce the overhead caused by the calculation of the checksum of the TCP, the checksum for the predictable data region among the fields of the TCP header and the pseudo header is calculated in advance. Thus the pipe line technique is adopted in which the transmission procedure and the checksum calculation procedure are overlapped in time. In this context, the fields of the TCP header and the pseudo header include: source port, destination port, header length, code bits, urgent pointer, MSS, protocol, source IP address, destination IP address, and TCP length. As to the data also, the checksum can be calculated in advance by reading the data from the buffer in accordance with the max segment size value which is decided during the call connection.

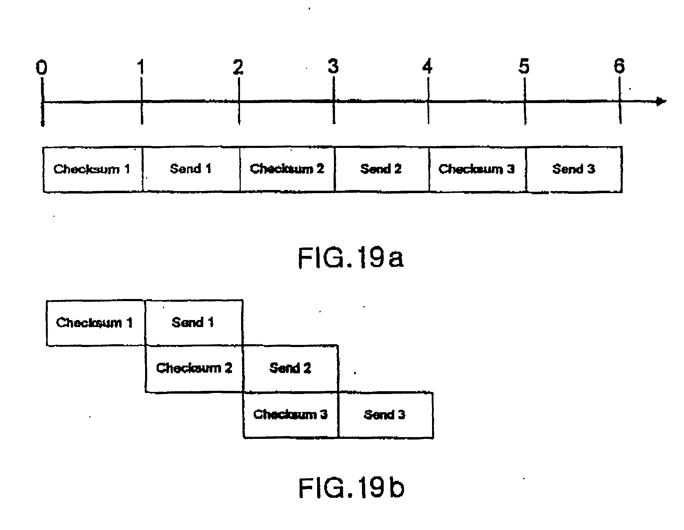

Accordingly, the method can be compared with the conventional method as follows. That is, in the conventional method as shown in FIG. 19a, after the checksum for the first data and header is formed, the segment consisting of the first data and header is transmitted. In contrast to this, in the method of present invention as shown in FIG. 19b, the transmission of a segment is carried out simultaneously with the calculation of the checksum for the next transmitting segment. Therefore, if it is assumed that three segments are to be transmitted, then 6 units of time are required in the conventional method, whereas in the present invention, only 4 units of time are consumed. This time difference is so much increased, as the amount of the data to be transmitted is increased. In the specific terms, usually twice or more of time is required in the conventional method compared with the present invention. In the Fig 19a, b, The numbers illustrated represent a unit of time, and the data size is all the same.

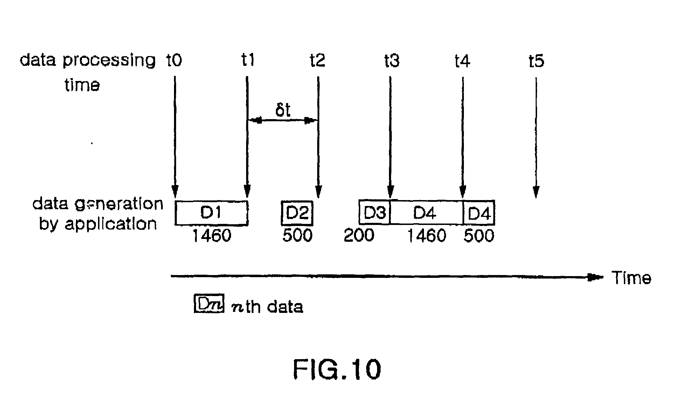

Said pipeline-type checksum calculation method is suitable for a mono channel environment, and it is possible to apply when the size of data to generate is all the same or when a buffer is filled with data to be transmitted. But in case of multi-channel environment, TCP hardware processes data in a channel and then processes data in another channel. Therefore, in view of processing data in a channel, data process and transmission will happen in a periodical manner. But, in view of apparatus, as shown in FIG 10, data to be transmitted will be varied as time.

In FIG 10, t0 illustrates time that an application starts to generate data, according to the apparatus of the present invention, data (D1) will be processed for the first time at t1 when is 8t after other data is being processed. As shown in FIG 10, data to be transmitted during t1 is 1460 bytes, t2 is 500 bytes, t3 is 200 bytes, t4 is 1460 bytes and t5 is 500 bytes, which represent different size of data to be processed.

Therefore, checksum calculation method for variable length data is preferred in the present invention.

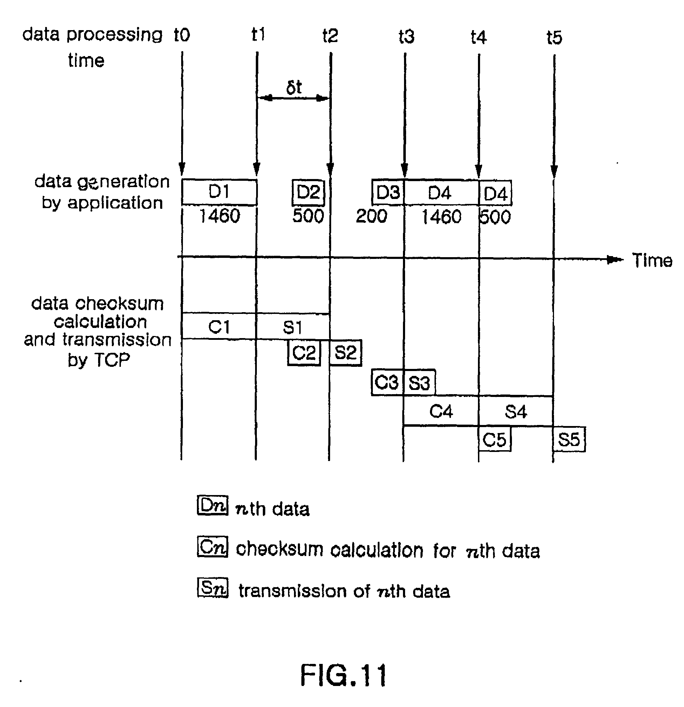

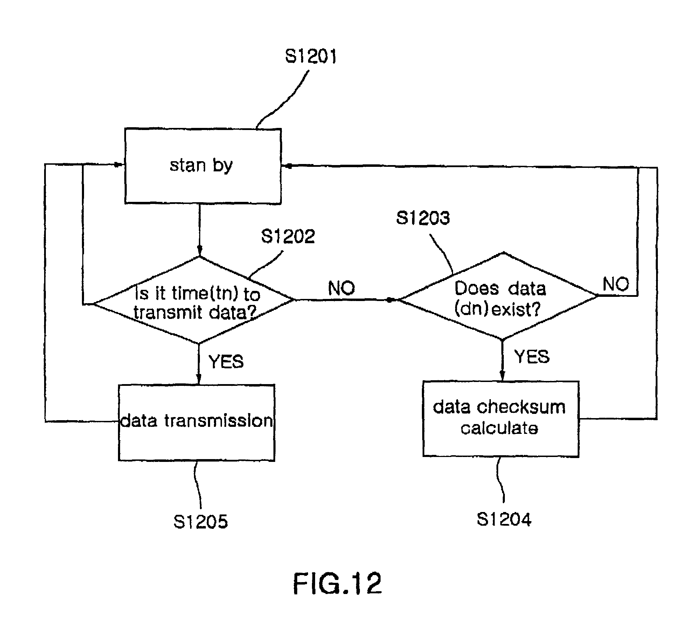

FIG 11 illustrates a timing diagram showing pipeline-type checksum calculation method, and FIG 12 represents a flow chart showing the process of pipeline-type checksum calculation method for processing said variable length data

As shown in FIG 11 and FIG 12, when the length of checksum data changes, all the channels will be on stand-by status after starting operation (s1201). And then all the channels will check if it is time to transmit data (t*n*). And if the time is t*n* to transmit data at a channel *n*, send data at the channel (s1205), wherein the transmitted data is stored data after checksum calculation completes.

When the time is not t***n*** to transmit data at a channel ***n*,** check if data to be processed exists (s1203). If data to be processed exists, as stated above, starts checksum calculation to send data at time t***n***. (s1204)

Said process is preceded for each channel, and pipeline-type checksum calculation can be done in advance for any time period during 8t, therefore data transmission capacity can be maximized up to 2.

As described above, the calculation of the checksum is carried out by hardware, and therefore, the calculation speed is improved compared with the conventional method in which the calculation is carried out by software. Further, the data which has been read from the memory for the calculation of the checksum is stored in the FIFO type buffer, and when the transmission is carried out, the data of the buffer can be transmitted directly, thereby reducing the number of the memory access times.

The conventional TCP software is operated in the kernel, and the OS was responsible for the task of storing and managing the data. In contrast to this, in the present invention, a buffer managing method using a sequence number is adopted, so that the overhead related to the buffer allocations and to the restoration and management of the buffers can be reduced. The sequence number is one of the fields of FIG. 15. That is, for the data which is being transmitted, a number is assigned to each byte unit, and the first byte number of the TCP segment is stored into the sequence number field. In the present invention, the receiving end carries out the reassembling of the data by using the sequence number, or detects any omitted data by using the sequence number, thereby requesting for a retransmission.

That is, by using the sequence number as the address of the buffer, the procedure of transmitting the data, the procedure of retransmitting the data and the procedure of reassembling the data are carried out in a simple manner. Further, three pointers such as WC, RC and FC are employed as shown in FIG. 6. The user data which has been received from the application is stored in the address which is indicated by the WC pointer. When transmitting the data, the data which is stored in the address indicated by the RC pointer is read and transmitted. If a retransmission is requested, the data of the address which is indicated by the FC pointer is copied to store it into the address indicated by the RC pointer. Then the data of the address which is indicated by the RC pointer is read and transmitted.

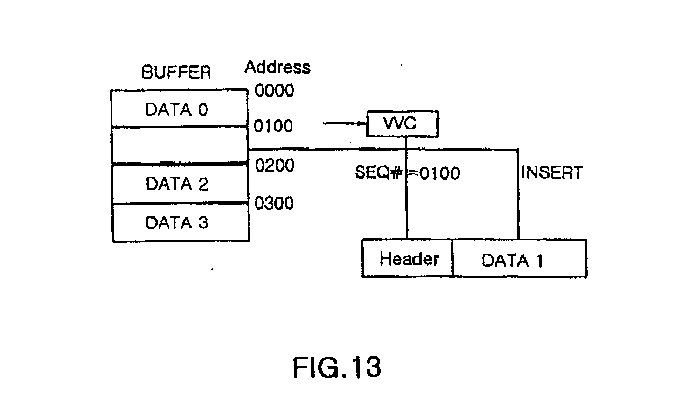

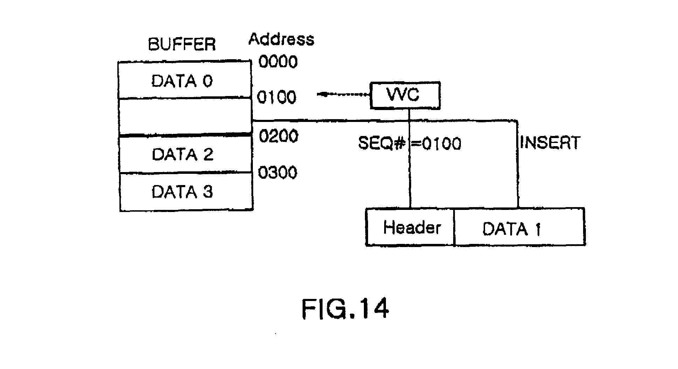

FIG. 13 illustrates a buffer managing method in which the data is transmitted by using the sequence number. FIG. 14 illustrates the reassembling of the data after receipt of the data.

When transmitting a data as shown in FIG. 13, a WC pointer value which indicates a physical address in the memory is inserted into the sequence number field of the segment to be transmitted. The data of the address which is indicated by the WC pointer is inserted as the data to be transmitted.

In FIG. 14, when reassembling the received data, the value of the sequence number field for the received segment is stored into the buffer based on the WC pointer value, and the data of the received segment is stored into the address which is indicated by the WC pointer.

## Claims

1. An apparatus for processing TCP/IP (Transmission Control Protocol / Internet Protocol) by hardware, comprising:
an information plane for processing a user data to be transmitted; and
a control plane for carrying out controls in connection with data transmission and reception, said two planes being separately provided.

2. The apparatus as claimed in claim 1, further comprising exclusive buffers for storing a data to be transmitted and a data to be received, so as to make the data (to be transmitted and received) directly transferred between a memory of a host system and said apparatus for processing the TCP/IP.

3. An apparatus for processing TCP/IP by hardware, comprising:
a TX information part for processing a user data to transmit it to a destination;
an RX information part for receiving a TCP segment from a transmitting side to process it, and to transmit a user data to an application layer; and
a control part for processing the control information related to the transmission and reception data, whereby a data transmission or reception is carried out regardless of a processing of a control information.

4. The apparatus as claimed in claim 3, further comprising exclusive buffers for storing a data to be transmitted and a data to be received, so as to directly transfer a transmitting data from a memory of a host system to said exclusive buffer, and so as to directly transfer a receiving data to said memory of said host system.

5. The apparatus as claimed in claim 3, wherein said TX information part comprises:
a header register for storing a received TCP header information;
an HLGM (header length generating module) for receiving a header information from said header register to calculate a length of a header;
a TLGM (total length generating module) for receiving a data length information from said header register, and for receiving a header length value from said HLGM, to calculate a total segment length as a sum of the header length and the data length;.
a TX buffer for receiving a user data (to be transmitted) through a bus of a host system, to store it;
a PCGM (partial checksum generating module) for calculating a checksum for predictable header and data before a transmission to generate a partial checksum;
an FCGM (final checksum generating module) for receiving a header value (decided immediately before a transmission of a TCP segment) and the partial checksum of said PCGM, to generate a final checksum;
an output header buffer for temporarily storing the header information together the final checksum of said FCGM;
a temp buffer for receiving the data (which has been read to calculate the partial checksum by said PCGM) to temporarily store the data; and
a TX Mux (TX multiplexer) for receiving the header information and the data from said output header buffer and said temp buffer to generate a TCP segment.

6. The apparatus as claimed in claim 3, wherein said RX information part comprises:
an RX Demux (RX demultiplexer) for separating the header and the data from each other in a received TCP segment;
an HCCM (header checksum control module) for checking the checksum of the header (which has been separately outputted from said RX Demux) to judge on transmission errors;
a DCCM (data checksum control module) for checking the checksum of the data (which has been separately outputted from said RX Demux) to judge on transmission errors;
an RX buffer for storing a data after its separate outputting from said RX Demux;
an RX header processing module for carrying out a relevant processing in accordance with the output header information of said RX Demux, and for discarding the received data by controlling said RX buffer if an error is found by said HCCM or said DCCM in the header or the data; and
a header register for storing the received header.

7. The apparatus as claimed in claim 3, wherein said control part comprises:
a TX control module for generating proper control signals to control said TX control part in accordance with the status of the protocol, and for ordering a retransmission to said TX information part upon encountering an error in a transmitted segment;
an RX control module for generating proper control signals in accordance with the status of the protocol to control said RX information part, and for checking as to whether a destination port of a received TCP segment is correct; and
a TCP control module for processing commands incoming from a user API, for controlling operations of said TX control module and said RX control module, and for notifying operation statuses of said modules to a user application.

8. The apparatus as claimed in any one of claims 5 to 7, wherein said apparatus comprises:
a WC (write counter) as a pointer which indicates a position for inserting a received user data;
an RC (read counter) as a pointer which indicates a starting position for a data to be read and to be transmitted; and
an FC (free counter) is a pointer which indicates a position for receiving an acknowledgement after a transmission of a data.

9. An apparatus for processing TCP/IP by hardware, comprising a checksum calculating structure,
said checksum calculating structure comprising:
a first module for calculating a partial checksum for predictable header value and data before carrying out a transmission;
a second module for receiving the partial checksum of said first module and a header value (which is decided immediately before the transmission) to generate a final checksum; and
a temp buffer for temporarily storing a user data until the final checksum is generated through said first module and by said second module.

10. An operating method of an apparatus for processing TCP/IP by hardware, comprising the steps of:
checking as to whether there is a data to be transmitted;
checking as to whether the data is a first transmitting data if there is found a data to be transmitted;
calculating a checksum if the data is a first transmitting data;
generating a TCP segment to transmit it, and simultaneously calculating a checksum for a next transmitting data and a header; and
inserting the checksum and data of the preceding step to generate and transmit a TCP segment if the mentioned data is not a first transmitting data, and simultaneously calculating a next transmitting data and a header.

11. An operating method of an apparatus for processing TCP/IP by hardware, comprising the steps of:
checking if it is time to transmit data on stand-by status;
transmitting data if it is time to transmit data;
checking if data exists when it is not the time to transmit data;
and starting ckecksum calculation for transmitted data, when it is not the time of sending data;
and said steps are operation method of transmission control protocol creation device characterized by being processed for each channel.

12. An operating method of an apparatus for processing TCP/IP by hardware, comprising the steps of:
inserting a buffer address of a transmitting data into a sequence number field, and inserting a data of a relevant address into a data field, to generate respective segments, when transmitting the data; and
storing the data of the received segment into an address of a buffer (which corresponds to a value of the sequence number field) when reassembling the data of a received segment.
